# EUROPÄISCHE PATENTANMELDUNG

(11) **EP 2 353 801 A2**
(43) Veröffentlichungstag der Anmeldung: **10.08.2011**
(21) Anmeldenummer: 11000901.6
(22) Anmeldetag: 04.02.2011
(51) Int. Cl.: B25J 9/16, G05B 19/401, B23Q 17/22

(54) **Arbeitsvorrichtung mit Roboter auf verfahrbarer Plattform sowie Arbeitsverfahren**

(30) Priorität: 04.02.2010 DE 102010007591
(71) Anmelder: Bremer Werk für Montagesysteme GmbH, 28865 Lilienthal (DE)
(72) Erfinder: Dörsch, Christian, 28359 Bremen (DE); Kebbel, Volker, Dr., 28357 Bremen (DE); Bruns, Michael, 27412 Tarmstedt (DE); Gebauer, Ingo, 28203 Bremen (DE); Hensing, Peter, 27777 Ganderkesee (DE)
(74) Vertreter: Philipp, Matthias

(57) **Zusammenfassung**

Arbeitsvorrichtung mit einer auf einem antreib- und lenkbaren Fahrwerk in mehreren Richtungen auf einem Untergrund selbsttätig verfahrbaren Plattform, mit einer Plattformsteuerung und einer dieser zugeordneten Positionserfassungseinrichtung, mit denen eine Positionierung und Ausrichtung der Plattform in einer Bewegungsebene relativ zu mindestens einer bezüglich des Untergrunds ortsfesten Referenzmarke durchführbar ist, wobei auf der Plattform ein mit einer Robotersteuerung versehener Roboter mit einem Roboterkopf und einem daran gehaltenen Arbeitskopf, insbesondere zum Bearbeiten eines Werkstücks, angeordnet ist, wobei der Arbeitskopf über die Robotersteuerung von dem Roboter in mehreren Achsen relativ zu der Plattform bewegbar und positionierbar ist, wobei die Plattformsteuerung in Kommunikation mit der Robotersteuerung steht und mindestens eine der Plattform- und Robotersteuerung mit einem Speicher zum Übernehmen von Werkstück-Positionsdaten und Daten betreffend festgelegte Arbeitspositionen an dem Werkstück verbunden ist, und wobei der Robotersteuerung eine an dem Arbeitskopf oder dem Roboterkopf angeordnete berührungslose Werkstückerfassungseinrichtung zugeordnet ist, die mit der Plattform- oder Robotersteuerung verbunden ist und eine Positionierung des Arbeitskopfs relativ zu einer festgelegten Arbeitsposition an dem Werkstück zulässt.

## Beschreibung

Die Erfindung betrifft eine Arbeitsvorrichtung mit einer auf einem antreib- und lenkbarem Fahrwerk in mehreren Richtungen auf einem Untergrund selbsttätig verfahrenbaren Plattform, wie sie in Anspruch 1 dargelegt ist.

Aus der DE 10 2007 045 143 A1 ist eine Bearbeitungsanlage bekannt, die aus einer Fördereinheit besteht, durch die ein Werkstück entlang eines Förderweges bewegbar ist, sowie aus einem Industrieroboter, der entlang des Werkstücks mitbewegbar ist und Bearbeitungs- oder Montagearbeiten an dem Werkstück ausführen kann.

Hierbei ist nachteilig, dass der Weg des Industrieroboters durch eine Führung entlang des Förderweges des Werkstücks festgelegt ist, so dass an sich nur einheitliche Werkstücke bearbeitet werden können. Insbesondere bei sehr großen Werkstücken ist die bekannte Vorrichtung nicht wirtschaftlich einsetzbar.

Die Aufgabe der Erfindung besteht darin, eine Arbeitsvorrichtung zu schaffen, die eine verbesserte Flexibilität insbesondere im Hinblick auf eine Bearbeitung besonders großer Werkstücke bietet.

Diese Aufgabe wird erfindungsgemäß durch eine Arbeitsvorrichtung nach Anspruch 1 gelöst.

Es kann vorgesehen sein, dass die Werkstückerfassungseinrichtung mit einer Anwendungssteuerung verbunden ist, die zur Koordinierung der Plattformsteuerung und der Robotersteuerung eingerichtet ist.

Bevorzugt ist vorgesehen, dass die Plattform drei oder vier Räder aufweist, von denen mindestens eines antreibbar ist.

Mindestens ein Rad kann in einer Richtung senkrecht zu der Bewegungsebene positionierbar oder höheneinstellbar sein, um Unebenheiten des Untergrunds auszugleichen.

Zweckmäßigerweise ist vorgesehen, dass der Roboter mindestens drei, vorzugsweise sechs Bewegungsachsen aufweist.

Die mindestens eine Referenzmarke kann eine reflektierende Fläche aufweisen, beispielsweise einen Reflektor oder Spiegel.

In Weiterbildung der Erfindung ist vorgesehen, dass die Plattformsteuerung und die Robotersteuerung so eingerichtet sind, dass bei einer Verfahrbewegung der Plattform die Arbeitsposition kontinuierlich in einem Arbeitsbereich des Roboters liegt.

Der Arbeitskopf kann ein Bearbeitungswerkzeug wie Bohr-, Schneid-, Fräs-, Schleif-und/oder Polierwerkzeug aufweisen. Alternativ oder zusätzlich kann der Arbeitskopf ein Handhabungswerkzeug wie Greif-, Einsetz-, Montage-, Füge- oder Abrollwerkzeug aufweisen.

Die Werkstückerfassungseinrichtung kann in einer vorgegebenen Arbeitsrichtung vor dem Arbeitskopf vorlaufend angeordnet sein.

Zweckmäßigerweise ist vorgesehen, dass die Positionserfassungseinrichtung, die Werkstückerfassungseinrichtung und/oder eine Werkstück-Positionsdatenerfassungseinrichtung berührungslos und insbesondere optisch arbeiten. Dies kann beispielsweise mittels Lasermeßtechnik (Laserabtastung, Laserlichtschnitttechnik, Laserliniensensor, Photogrammetrie) erfolgen.

Die Erfindung betrifft weiterhin ein Verfahren zum Ausführen eines Arbeitsvorgangs an einem Werkstück, mit einer Arbeitsvorrichtung nach einem der vorangehenden Ansprüche, mit den Schritten: Erfassen von Werkstück-Positionsdaten mit einer Werkstück-Positionsdatenerfassungseinrichtung, Festlegen einer Arbeitsposition an dem Werkstück, Übergeben der Werkstück-Positionsdaten und der Daten betreffend die festgesetzte Arbeitsposition an den Speicher, Bewegen der Plattform, bis die Arbeitsposition in einem Arbeitsbereich des Roboters liegt, Bewegen des Arbeitskopfs an die Arbeitsposition, und Ausführen des Arbeitsvorgangs an dem Werkstück.

Das Bewegen der Plattform und/oder das Bewegen des Arbeitskopfs an die Arbeitsposition und/oder das Ausführen des Arbeitsvorgangs an dem Werkstück kann bzw. können selbsttätig oder automatisch ausgeführt werden, entweder nachdem die Werkstück-Positionsdaten und die Arbeitspositions-Daten vollständig an den Speicher übergeben worden sind, oder nachdem zusätzlich noch ein Startsignal an eine der Steuerungen gegeben worden ist.

Zweckmäßigerweise ist vorgesehen, dass der Arbeitskopf einer Bearbeitungslinie entlang des Werkstücks folgt.

Die Erfindung wird nachfolgend anhand eines Ausführungsbeispiels erläutert, wobei auf eine Zeichnung Bezug genommen ist, in der
Fig. 1 eine schematische Draufsicht auf eine auf einem Untergrund verfahrbare Arbeitsvorrichtung zeigt,
Fig. 2 eine perspektivische Ansicht der Arbeitsvorrichtung im Einsatz an einem Werkstück zeigt,
Fig. 3 eine perspektivische Ansicht von oben entsprechend Fig. 2 zeigt,
Fig. 4 eine vergrößerte perspektivische Ansicht des Roboters und des Arbeitskopfs nach Fig. 5 zeigt,
Fig. 5 eine perspektivische seitliche Ansicht einer Arbeitsvorrichtung mit einem anderen Arbeitskopf zeigt, und
Fig. 6 eine vergrößerte perspektivische Ansicht des Roboters und des Arbeitskopfs nach Fig. 5. zeigt.

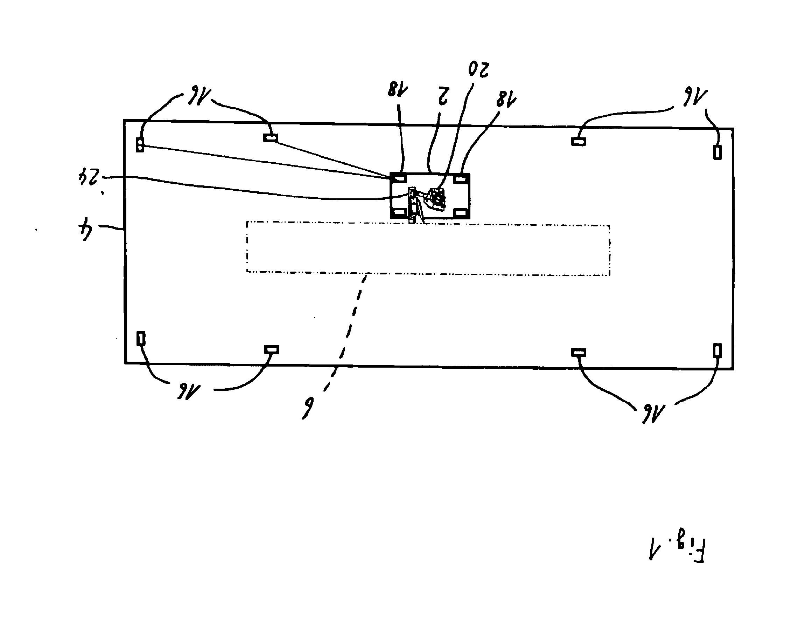

Fig. 1 bis 4 erläutern eine erste Ausführungsform der Erfindung, bei der der Arbeitskopf des Roboters mit einem Bohrwerkzeug bestückt ist.

Fig. 1 zeigt eine Draufsicht auf eine Bearbeitungsstation mit einer Arbeitsvorrichtung nach der Erfindung, wobei eine Plattform 2 auf einem ebenen Untergrund 4, beispielsweise einem Betonboden einer Halle, in einer Bewegungsebene verfahrbar ist. In dem dargestellten Beispiel ist der Untergrund 4 horizontal und damit auch die durch die Oberfläche des Untergrunds gebildete Bewegungsebene, in der die Plattform verfahrbar ist. Fig. 1 zeigt eine Bearbeitungssituation, bei der die Erfindung mit Vorteil einsetzbar ist, nämlich zur Bearbeitung eines besonders großen Werkstücks 6, bei dem es sich im dargestellten Beispiel um ein Großbauteil wie etwa einen Flugzeugflügel handelt, das zur Bearbeitung nicht in eine übliche Werkzeugmaschine oder Werkstückhalterung eingespannt werden kann.

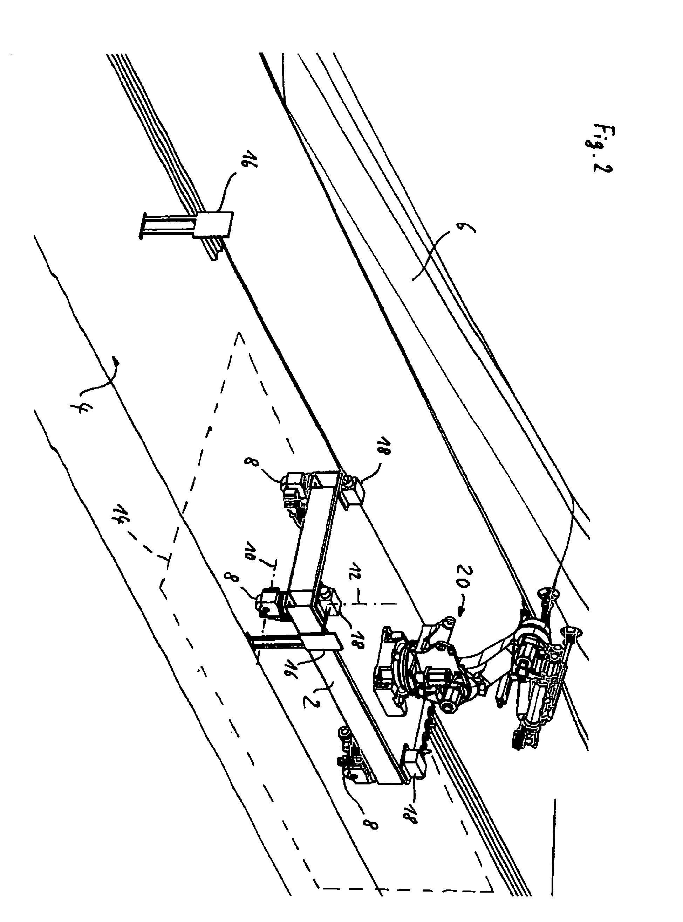

Fig. 2 zeigt, dass die Plattform 2 auf einem Fahrwerk verfahrbar ist, das in diesem Beispiel durch vier Räder 8 gebildet ist, die in vier Ecken der im ganzen rechteckigen Plattform 2 angebracht sind. Jedes Rad 8 ist um eine horizontale Drehachse 10 drehbar und um eine vertikale Schwenkachse 12 schwenk- oder lenkbar. Mindestens eines der Räder 8 ist gesteuert antreibbar, so dass sich eine Bewegung, Positionierung und Ausrichtung der Plattform 2 innerhalb der mit 14 angedeuteten Bewegungsebene realisieren lässt. In der dargestellten Ausführungsform sind alle vier Räder unabhängig voneinander gesteuert lenk- und antreibbar.

Obwohl in dem dargestellten Beispiel der vertikale Abstand der einzelnen Räder 8 von der Plattform 2 unveränderlich ist, kann vorgesehen sein, dass zum Ausgleich von Unebenheiten des Untergrunds 4 eines oder mehrere der Räder relativ zu der Plattform 2 vertikal verstellbar ist und somit der Abstand der Drehachse 10 von der Plattform 2 einstellbar ist, so dass stets eine definierte Position der Plattform 2 auf dem Untergrund 4 und innerhalb der Bewegungsebene 14 gewährleistet ist.

Die Arbeitsvorrichtung ist mit einer Plattformsteuerung zum koordiniert gesteuerten Antrieb der Räder und mit einer der Plattformsteuerung zugeordneten Positionserfassungseinrichtung versehen, um die Plattform innerhalb der Bewegungsebene gezielt positionieren und ausrichten zu können. Die Positionserfassungseinrichtung umfasst mindestens eine, in dem dargestellten Beispiel mehrere bezüglich des Untergrunds 2 ortsfeste Referenzmarken 16, die als Bezugspunkte für auf der Plattform 2, um senkrecht zur Bewegungsebene verlaufende Schwenkachsen drehbare angeordnete Positionssensoren 18 dienen. In dem dargestellten Beispiel arbeitet die Positionserfassungseinrichtung berührungslos, insbesondere optisch auf Laserbasis, wobei jeder Positionssensor 18 einen Laser enthält, dessen Strahl auf eine Referenzmarke 16 fällt und von dort zu dem Positionssensor 18 zurückreflektiert wird. Jede Referenzmarke 16 weist einen Reflektor oder Spiegel auf, der einfallende Strahlen in Einfallrichtung zurückwirft, oder auch einen um eine zur Bewegungsebene 14 senkrechte Drehachse drehbaren Spiegel mit einer zur Bewegungsebene senkrechten Spiegelfläche, der während eines Positionierungsvorganges der Plattform 2 stets derart nachgestellt wird, dass der reflektierte Laserstrahl auf den Positionssensor 18 fällt, der ebenfalls nachgestellt wird. Zweckmäßig sind so viele Referenzmarken vorgesehen, dass eine Positionierung innerhalb eines gesamten gewünschten Arbeitsbereichs möglich ist. Wenn das Werkstück von mehreren Seiten bearbeitet werden soll, sind daher Referenzmarken an mehreren Seiten des Werkstücks oder entlang des gesamten Umfangs des Untergrunds 2 erforderlich. Auf diese Weise kann eine lasergestützte Abstandsmessung vorgenommen werden, die eine Positionsbestimmung hinsichtlich Position und Ausrichtung der Plattform in der Bewegungsebene ermöglicht. Die Referenzmarken ermöglichen auch die Definition eines Koordinatensystems eines Arbeitsraums.

Auf der Plattform 2 ist ein Roboter 20 angebracht, der an einem Roboterkopf 22 einen Arbeitskopf 24 trägt und in dem dargestellten Beispiel um sechs Bewegungsachsen (Drehbarkeit um drei zueinander senkrechte Achsen sowie translatorische Bewegung entlang der Achsen) bewegbar ist. Der Arbeitskopf 24 ist in dem dargestellten Ausführungsbeispiel mit einem Bohrwerkzeug 26 und einem Bohrer 28 versehen.

Da für die Einbringung von Bohrlöchern mit einer Toleranz mit beispielsweise +/- 0,1 mm eine besonders genaue Positionierung des Bohrers 28 relativ zum Werkstück 6 erforderlich ist und auch gewisse Bohrkräfte übertragen werden müssen, weist das Bohrwerkzeug 26 drei Stützstreben 30 auf, die schwenkbar und teleskopartig ausfahrbar an dem Arbeitskopf 24 gehalten sind und an ihren freien Enden mit Haft- oder Saugtellern 32 versehen sind, um einen festen Halt am Werkstück 6 zu vermitteln. Damit ist gewährleistet, dass auftretende Bohrkräfte nicht zu unerwünschten Verlagerungen des Roboterkopfs führen, die sich bei einem Mehrachsroboter auf Grund der vielfältigen Bewegungsmöglichkeiten nicht vollständig vermeiden ließen.

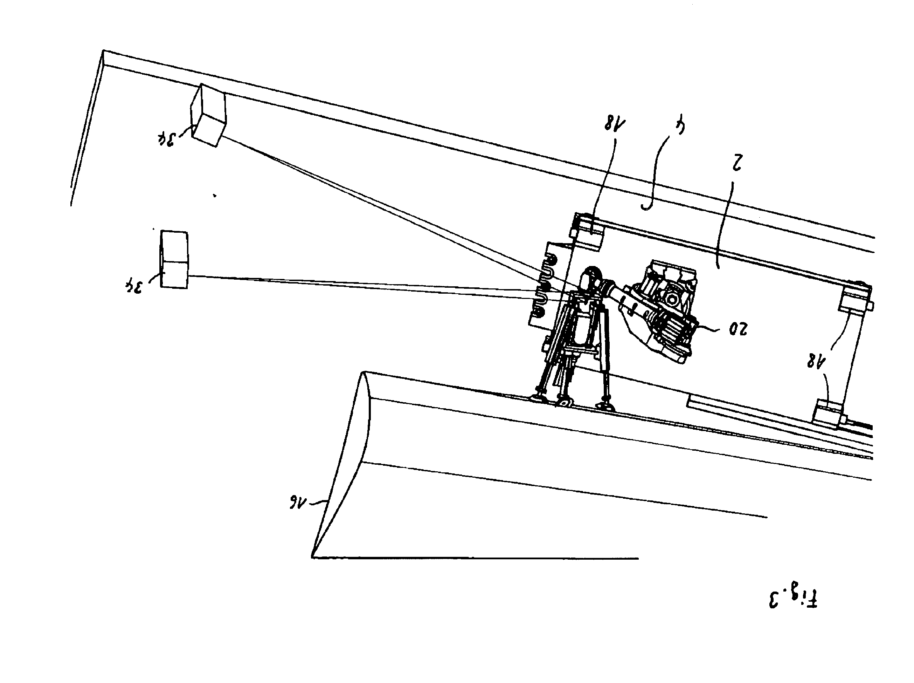

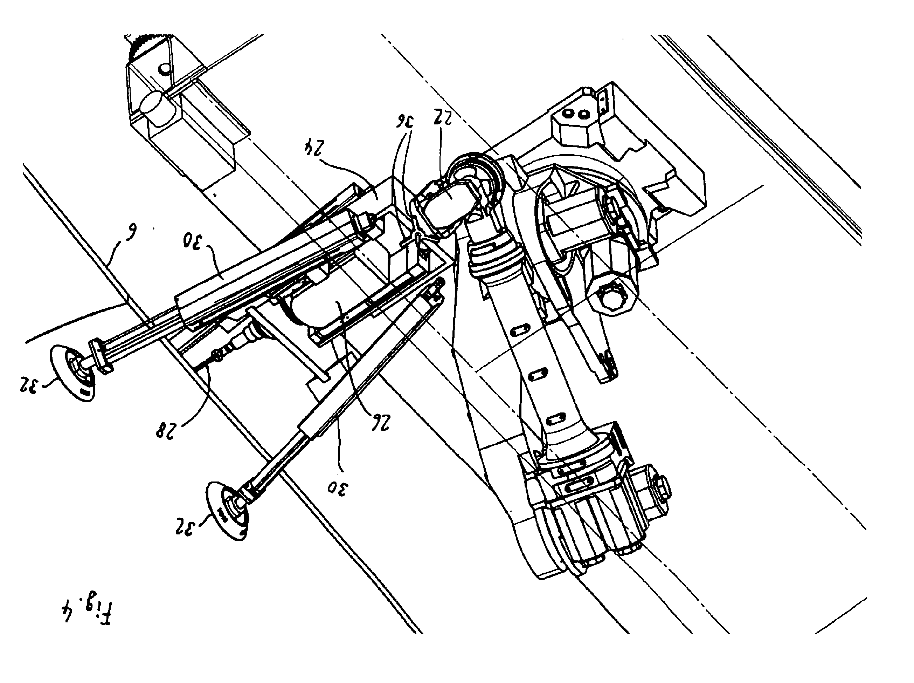

Zur Erhöhung der Präzision bei bestimmten Arbeiten, wie beispielsweise beim Einbringen von Bohrungen, kann der Arbeitskopf des Roboters, zusätzlich zu der ohnehin gegebenen Positionierung durch die Plattform- und Robotersteuerung, optisch eingemessen werden (Fig. 3). Hierzu sind zwei Kameras 34 mit gegenseitigem Abstand auf dem Untergrund 2 aufgestellt, die mehrere in definierter Position auf dem Roboterkopf 22 fixierte, z.B. mit LED's bestückte Referenzmarken 36 (Fig. 4) anpeilen und deren räumliche Position erfassen können. Die in Fig. 3 eingezeichneten Sichtlinien zwischen Kameras 34 und Referenzmarken 36 verdeutlichen diesen Erfassungsvorgang. Auf diese Weise lässt sich die Positionierung des Roboterkopfs relativ zum Werkstück 6 verbessern, da die Positionierung der Plattform 2 auf dem Untergrund 4 beispielsweise auf Grund von Unebenheiten des Untergrunds häufig mit gewissen Toleranzen behaftet ist. Daneben ist die Positionierung und Lageausrichtung des Roboterkopfs aufgrund mechanischen Spiels mit Toleranzen behaftet, die sich durch unmittelbare Positionsvermessung des Roboterkopfs reduzieren lassen.

Der Roboter weist eine Robotersteuerung auf, mit der er in sämtlichen Achsen relativ zu der Plattform beweg- und positionierbar ist. Der Arbeitskopf oder der Roboterkopf weist eine nicht dargestellte, der Robotersteuerung zugeordnete berührungslose Werkstückerfassungseinrichtung auf, die beispielsweise optisch arbeiten und als Laserlichtschnitteinrichtung mit einem Laser-Liniensensor ausgebildet sein kann. An dem Werkstück ist vorab eine Arbeitsposition festgelegt worden, und die Werkstückerfassungseinrichtung ermöglicht eine Positionierung des Arbeitskopfs in der oder relativ zu der Arbeitsposition.

Die Plattformsteuerung steht in Verbindung mit der Robotersteuerung, so dass ein aufeinander abgestimmter Betrieb von Plattform und Roboter möglich ist.

Die Plattformsteuerung und/oder die Robotersteuerung, vorzugsweise beide, ist bzw. sind mit einem Datenspeicher versehen oder verbunden_{;} der zum Übernehmen von Werkstück-Positionsdaten und der festgelegten Arbeitsposition an dem Werkstück eingerichtet ist und diese Daten nach deren Erfassung übernehmen und speichern kann.

Die Werkstück-Positionsdaten werden beispielsweise für ein großes Werkstück wie einen Flugzeugflügel bevorzugt optisch und insbesondere mittels Photogrammetrie erhoben. Die Messdatenaufnahme erfolgt mit zwei Kameras und einem von Hand oder mit Hilfe eines Roboters zu haltenden Messelement (Meßtaster), welches mit einer Referenzspitze und mehreren mit LED's bestückten Referenzpositionen versehen ist. Während das Messelement mit der Referenzspitze auf einen zu lokalisierenden Punkt des Werkstücks gehalten wird, erfassen die Kameras aus zwei unterschiedlichen Blickrichtungen die Referenzpositionen des Messelements, wobei sich die auf diese Weise erhaltenen Daten anhand der bekannten Kamerapositionen in eine absolute Position der Referenzspitze und damit des gerade zu lokalisierenden Werkstückpunkts umrechnen lassen.

An dem Werkstück, beispielsweise einem Flügel, werden so zahlreiche Punkte auf dessen Oberfläche als Referenzpunkte erhoben und anschließend zu einem Modell zusammengefasst, wobei die gemessenen Daten ggf. noch über Anpassungsverfahren an vorhandene CAD-Daten des Werkstücks angeglichen werden und als Ergebnis eine numerisch bestimmte, etwa aus Einzeldaten interpolierte, oder mathematisch definierte, insbesondere lückenlose Oberfläche des Werkstücks erhalten wird, die (ganz oder Teile davon) die Werkstück-Positionsdaten darstellt.

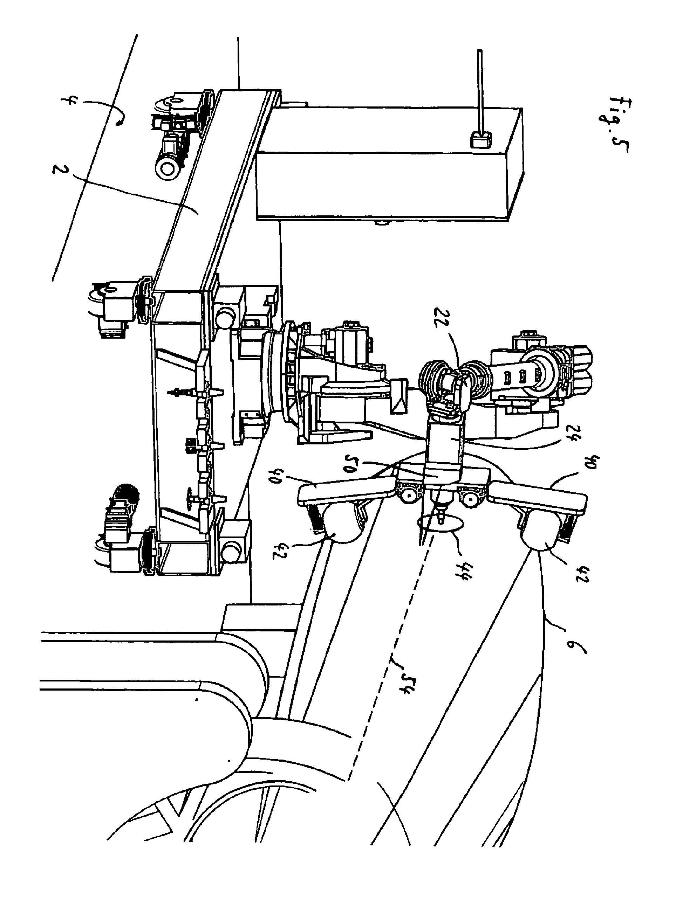

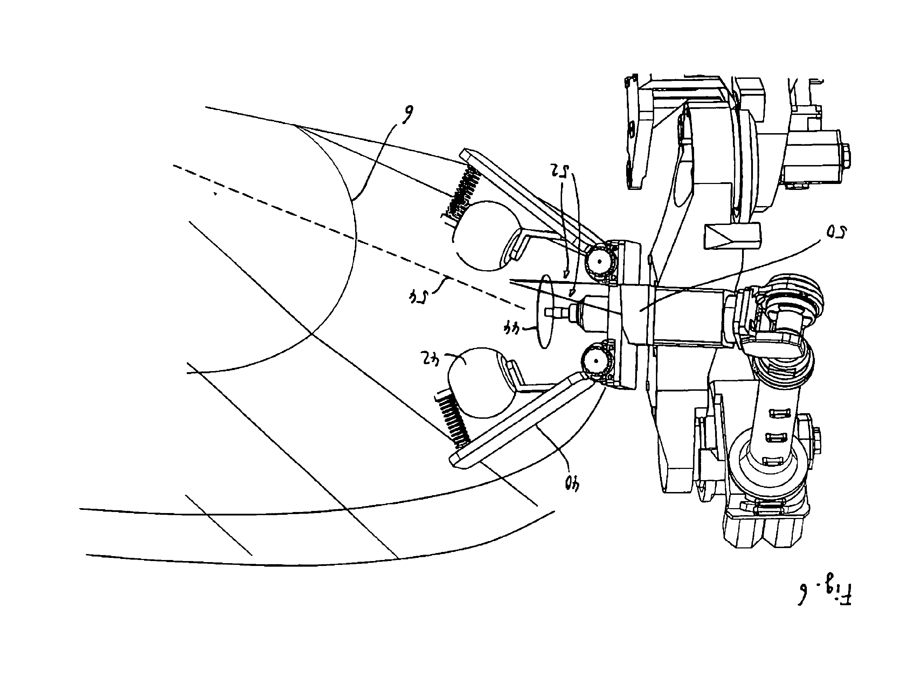

Fig. 5 und 6 zeigen eine Arbeitsvorrichtung, die anders als die Ausführung nach Fig. 1 bis 4 mit einem Bearbeitungswerkzeug zum Ausführen eines abtragenden Bearbeitungsvorgangs an einem Werkstück wie Flügel ausgebildet ist. Der Arbeitskopf 24 weist zwei an Auslegern 40 gehaltene Abstützrollen 42 auf, die ähnlich wie die Stützstreben 30 bei dem Bohrwerkzeug 26 für eine erhöhte Präzision und zur Aufnahme von Bearbeitungskräften dienen. Beispielhaft dargestellt ist eine Schleifscheibe 44, wobei es sich alternativ oder zusätzlich auch um eine Fräs- oder Polierscheibe handeln könnte.

Zur Verfolgung einer vorgegebenen Bearbeitungslinie ist der Arbeitskopf oder der Roboterkopf mit einer Werkstückerfassungseinrichtung 50 versehen, die in diesem Fall als optische Erfassungseinrichtung in Form eines Laser-Liniensensors ausgebildet ist. Erläuterungshalber zeigt Fig. 6 zwei Laserstrahlen 52. Die Werkstückerfassungseinrichtung 50 ist bezüglich einer Arbeitslinie 54 vorlaufend vor dem Arbeitskopf angeordnet, so dass die Robotersteuerung Daten für die Nachfuhrung des Arbeitskopfs entlang der Bearbeitungslinie 54 enthält. Alternativ kann die Werkstückerfassungseinrichtung bei metallischen oder aus CFK bestehenden Werkstücken mit Wirbelstrom arbeiten.

Zur Bearbeitung eines Werkstücks wird zunächst die Werkstückgeometrie (Werkstück-Positionsdaten) durch Ermittlung definierter Referenzpunkte mittels berührungsloser, insbesondere optischer Messverfahren erfasst und gegebenenfalls mit einem vorhanden CAD-Datensatz des Werkstücks abgeglichen. Die Position und Orientierung der verfahrbaren Plattform wird ebenfalls messtechnisch innerhalb des Bearbeitungs- oder Handhabungsraums und für eine Fahrroute fortlaufend bestimmt. Aus diesen Informationen wird eine Bahn erzeugt, die unter Berücksichtigung des erreichbaren Arbeitsraums des Roboters eine Fahrroute mit einem festgelegten Mindest- und/oder Höchstabstand entlang des Werkstücks definiert. Die Plattform fährt dabei kontinuierlich oder diskontinuierlich, um den Arbeitskopf vorzupositionieren, beispielsweise mit einer Genauigkeit von +/- 5 mm, wobei in der Regel eine genauere Positionierung auf Grund von Unebenheiten des Untergrunds und sonstiger Toleranzen nicht möglich ist.

Zur Ausführung eines Arbeitsvorgangs an dem Werkstück fährt die Plattform eine Startposition an, die aus den Werkstück-Positionsdaten und der Position der Plattform ermittelt wird. Aus den gleichen Daten wird eine Suchbewegung durch den Roboter mit der berührungslosen Werkstückerfassungseinrichtung am Roboter- oder Arbeitskopf durchgeführt, um eine Arbeitsposition exakt und fein positioniert zu finden, oder einen exakten, fein positionierten Startpunkt für eine entlang einer Bearbeitungslinie durchzuführende Bearbeitung zu finden. Der Anfangspunkt auf der Bearbeitungslinie wird für einen Arbeitsvorgang vor Bearbeitungsbeginn festgelegt.

Die Plattformsteuerung und die Robotersteuerung können hierbei miteinander kommunizieren, um die Grob- und Feinpositionierung gegenseitig zu unterstützen.

Wenn eine Bearbeitung entlang einer Bearbeitungslinie ausgeführt wird, erfolgt durch die Werkstückerfassungseinrichtung eine Erfassung von Abweichungen zwischen der tatsächlichen Bearbeitungsposition des Arbeitskopfs und der gewünschten vorgegebenen Bearbeitungslinie. Zu diesem Zweck ist die Werkstückerfassungseinrichtung vorlaufend oder voreilend vor dem Arbeitskopf angeordnet, damit während des Bearbeitungsvorgangs die Berechnung der Bahnkorrektur kontinuierlich erfolgen kann.

### Bezugzeichenliste

- 2: Plattform
- 4: Untergrund
- 6: Werkstück
- 8: Rad
- 10: Drehachse
- 12: Schwenkachse
- 14: Bewegungsebene
- 16: Referenzmarke
- 18: Positionssensor
- 20: Roboter
- 22: Roboterkopf
- 24: Arbeitskopf
- 26: Bohrwerkzeug
- 28: Bohrer
- 30: Stützstrebe
- 32: Haft- / Saugteller
- 34: Kamera
- 36: Referenzmarke
- 40: Ausleger
- 42: Abstützrolle
- 44: Schleifscheibe
- 50: Werkstückerfassungseinrichtung
- 52: Laserstrahl
- 54: Bearbeitungslinie

## Patentansprüche

1. Arbeitsvorrichtung mit einer auf einem antreib- und lenkbaren Fahrwerk (8) in mehreren Richtungen auf einem Untergrund (4) selbsttätig verfahrbaren Plattform (2), mit einer Plattformsteuerung und einer dieser zugeordneten Positionserfassungseinrichtung, mit denen eine Positionierung und Ausrichtung der Plattform (2) in einer Bewegungsebene (14) relativ zu mindestens einer bezüglich des Untergrunds (4) ortsfesten Referenzmarke (16) durchführbar ist, wobei auf der Plattform (2) ein mit einer Robotersteuerung versehener Roboter (20) mit einem Roboterkopf (22) und einem daran gehaltenen Arbeitskopf (24), insbesondere zum Bearbeiten eines Werkstücks (6), angeordnet ist, wobei der Arbeitskopf (24) über die Robotersteuerung von dem Roboter (20) in mehreren Achsen relativ zu der Plattform (2) bewegbar und positionierbar ist, wobei die Plattformsteuerung in Kommunikation mit der Robotersteuerung steht und mindestens eine der Plattform- und Robotersteuerung mit einem Speicher zum Übernehmen von Werkstück-Positionsdaten und Daten betreffend festgelegte Arbeitspositionen an dem Werkstück (6) verbunden ist, und wobei der Robotersteuerung eine an dem Arbeitskopf (24) oder dem Roboterkopf (22) angeordnete berührungslose Werkstückerfassungseinrichtung (50) zugeordnet ist, die mit der Plattform- oder Robotersteuerung verbunden ist und eine Positionierung des Arbeitskopfs (24) relativ zu einer festgelegten Arbeitsposition an dem Werkstück (6) zulässt.

2. Arbeitsvorrichtung nach Anspruch 1, **dadurch gekennzeichnet, dass** die Werkstückerfassungseinrichtung (50) mit einer Anwendungssteuerung verbunden ist, die zur Koordination der Plattformsteuerung und der Robotersteuerung eingerichtet ist.

3. Arbeitsvorrichtung nach Anspruch 1 oder 2, **dadurch gekennzeichnet, dass** die Plattform (2) drei oder vier Räder aufweist, von denen mindestens eines antreibbar ist.

4. Arbeitsvorrichtung nach Anspruch 1, 2 oder 3, **dadurch gekennzeichnet, dass** mindestens ein Rad (8) in einer Richtung senkrecht zu der Bewegungsebene (14) positionierbar ist, um Unebenheiten des Untergrunds (4) auszugleichen.

5. Arbeitsvorrichtung nach einem der vorangehenden Ansprüche, **dadurch gekennzeichnet, dass** der Roboter (20) mindestens drei Bewegungsachsen aufweist.

6. Arbeitsvorrichtung nach einem der vorangehenden Ansprüche, **dadurch gekennzeichnet, dass** die Referenzmarke (16) eine reflektierende Fläche aufweist.

7. Arbeitsvorrichtung nach einem der vorangehenden Ansprüche, **dadurch gekennzeichnet, dass** die Plattformsteuerung und die Robotersteuerung so eingerichtet sind, dass bei einer Verfahrbewegung der Plattform (2) die Arbeitsposition kontinuierlich in einem Arbeitsbereich des Roboters (20) liegt.

8. Arbeitsvorrichtung nach einem der vorangehenden Ansprüche, **dadurch gekennzeichnet, dass** der Arbeitskopf (24) ein Bearbeitungswerkzeug wie Bohr-, Schneid-, Fräs-, Schleif- und/oder Polierwerkzeug aufweist.

9. Arbeitsvorrichtung nach einem der vorangehenden Ansprüchen, **dadurch gekennzeichnet, dass** der Arbeitskopf (24) ein Handhabungswerkzeug wie Greif-, Einsetz-, Montage-, Füge- oder Abrollwerkzeug aufweist.

10. Arbeitvorrichtung nach einem der vorangehenden Ansprüchen, **dadurch gekennzeichnet, dass** die Werkstückerfassungseinrichtung (50) in einer vorgegebenen Arbeitsrichtung vor dem Arbeitskopf (24) vorlaufend angeordnet ist.

11. Arbeitsvorrichtung nach einem der vorangehenden Ansprüche, **dadurch gekennzeichnet, dass** die Positionserfassungseinrichtung, die Werkstückerfassungseinrichtung (50) und/oder eine Werkstück-Positionsdatenerfassungseinrichtung berührungslos, insbesondere optisch arbeiten.

12. Verfahren zum Ausführen eines Arbeitsvorgangs an einem Werkstück (6), mit einer Arbeitsvorrichtung nach einem der vorangehenden Ansprüche, mit den Schritten:
- Erfassen von Werkstück-Positionsdaten mit einer Werkstück-Positionsdatenerfassungseinrichtung,
- Festlegen einer Arbeitsposition an dem Werkstück (6),
- Übergeben der Werkstück-Positionsdaten und der Daten betreffend die festgelegte Arbeitsposition an den Speicher,
- Bewegen der Plattform (2), bis die Arbeitsposition in einem Arbeitsbereich des Roboters (20) liegt,
- Bewegen des Arbeitskopfes (24) an die Arbeitsposition, und
- Ausführen des Arbeitsvorgangs an dem Werkstück (6).

13. Verfahren nach Anspruch 12, **dadurch gekennzeichnet, dass** der Arbeitskopf (24) einer Bearbeitungslinie (54) entlang des Werkstücks (6) folgt.
